# EUROPEAN PATENT APPLICATION

(11) **EP 3 675 013 A1**
(43) Date of publication of application: **01.07.2020**
(21) Application number: 19217823.4
(22) Date of filing: 19.12.2019
(51) Int. Cl.: G06Q 20/10, G06Q 20/02, G06Q 20/38

(54) **METHOD AND DEVICE FOR SECURE PUSH PAYMENTS**

(30) Priority: 27.12.2018 FR 1874202
(71) Applicant: Bancontact Payconiq Company, 1040 Bruxelles (BE)
(72) Inventor: THYS, Gerd, 1040 Bruxelles (BE)
(74) Representative: Cabinet Beaumont

(57) **Abstract**

The present disclosure relates to a method of making a payer initiated push payment to a payee bank account comprising:
- receiving, by a first server (106) from a second server (112) associated with a payee, payee attributes comprising at least an account number of the payee bank account, and a payee attribute signature;
- verifying, by the first server (106), the payee attribute signature based on the payee attributes received from the second server (112); and
- initiating, by the first server (106), the push payment to the payee bank account if the verification of the payee attribute signature is successful.

## Description

### Technical field

The present disclosure relates to the field of payments, and in particular to methods and devices for making push payments, also known as payer initiated payments.

### Background art

In the card payment environment, a payment is initiated by the authentication of the cardholder at the point of sale. An acquirer is used to initiate a payment authorization request, which is sent to the card issuer. The card issuer decides the outcome of the transaction (authorization). The position of the acquirer makes merchant-initiated fraud difficult, since malicious merchants can be locked out of the system at the beginning of the authorization process. Furthermore, the merchant account information is managed by the acquirer, who is also in charge of the settlement of the funds based on the accounts kept in its systems, again making fraud more difficult.

Non-card payments corresponding to rapid bank transfers between accounts provide an alternative to card payments. SEPA (Single Euro Payments Area) is a payment-integration initiative of the European Union aimed at simplifying bank transfers between euro accounts. SEPA transfers are based on an IBAN (International Bank Account Number) identifying the payee account. Two SEPA credit transfer schemes have been proposed, known as SCT (SEPA Credit Transfer) and SCT Inst (SEPA Instant Credit Transfer). The SCT payment scheme provides relatively rapid transfers, while SCT Inst promises instant crediting from one account to another, generally in under 10 seconds, or a maximum of 20 seconds in exceptional circumstances.

There is however a technical difficulty in ensuring payment security in the case of payer initiated payments based on SEPA transfers or other types of push payments.

### Summary of Invention

It is an aim of embodiments of the present description to at least partially address one or more technical difficulties in the prior art.

According to one aspect, there is provided a method of making a payer initiated push payment to a payee bank account comprising: receiving, by a first server from a second server associated with a payee, payee attributes comprising at least an account number of the payee bank account, and a payee attribute signature; verifying, by the first server, the payee attribute signature based on the payee attributes received from the second server; and initiating, by the first server, the push payment to the payee bank account if the verification of the payee attribute signature is successful.

According to one embodiment, initiating the push payment by the first server comprises generating a payment initiation message comprising the account number of the payee bank account.

According to one embodiment, the method further comprises generating, by a payee register, the payee attribute signature based on payee attributes provided by a payee device and storing the payee attribute signature at the second server.

According to one embodiment, verifying the payee attribute signature comprises: generating, by the first server, a further payee attribute signature based on the payee attributes received from the second server and on a private key; and comparing the further payee attribute signature with the payee attribute signature received from the second server.

According to one embodiment, the method further comprises deriving, by the first server, the private key from a master key based on an identifier of a payee register.

According to one embodiment, the payee attribute signature is generated by applying a first hash function to the payee attributes to generate a first digest value and generating a payee attribute signature by encrypting the first digest value based on a private key.

According to one embodiment, the method further comprising: applying, by the first server, a second hash function, which is the same as the first hash function, to the received payee attributes to generate a second digest value; decrypting the received payee attribute signature based on a public key to generate a further digest value; and comparing the second digest value with the further digest value to verify the payee attribute signature.

According to one embodiment, the payee account number is an IBAN (International Bank Account Number).

According to one embodiment, the push payment is a Single Euro Payments Area Instant Credit Transfer (SCT Inst).

According to a further aspect, there is provided a payment server configured to: receive, from a second server associated with a payee, payee attributes comprising at least an account number of a payee bank account, and a payee attribute signature; verify the payee attribute signature based on the payee attributes received from the second server; and initiate a push payment to the payee bank account if the verification of the payee attribute signature is successful.

According to yet a further aspect, there is provided a push payment system comprising: the above payment server; and a payee register configured to generate the payee attribute signature based on payee attributes provided by a payee device.

According to one embodiment, the payee register is configured to store payee attributes associated with a plurality of payees.

### Brief description of drawings

The foregoing features and advantages, as well as others, will be described in detail in the following description of specific embodiments given by way of illustration and not limitation with reference to the accompanying drawings, in which:
Figure 1 schematically illustrates an example of a push payment system;
Figure 2 schematically illustrates a push payment system according to an example embodiment of the present disclosure;
Figure 3 is a flow diagram illustrating operations in a method of performing a push payment according to an example embodiment of the present disclosure;
Figure 4 schematically illustrates a payment server of Figure 2 in more detail according to an example embodiment of the present disclosure;
Figure 5 schematically represents signature generation and verification processes according to an example embodiment of the present disclosure; and
Figure 6 schematically represents signature generation and verification processes according to an alternative example embodiment to that of Figure 5.

### Description of embodiments

While in the following description embodiments are described based on the SCT Inst payment scheme, it will be apparent to those skilled in the art that the techniques described herein could be applied to other types of payer initiated non-card payments.

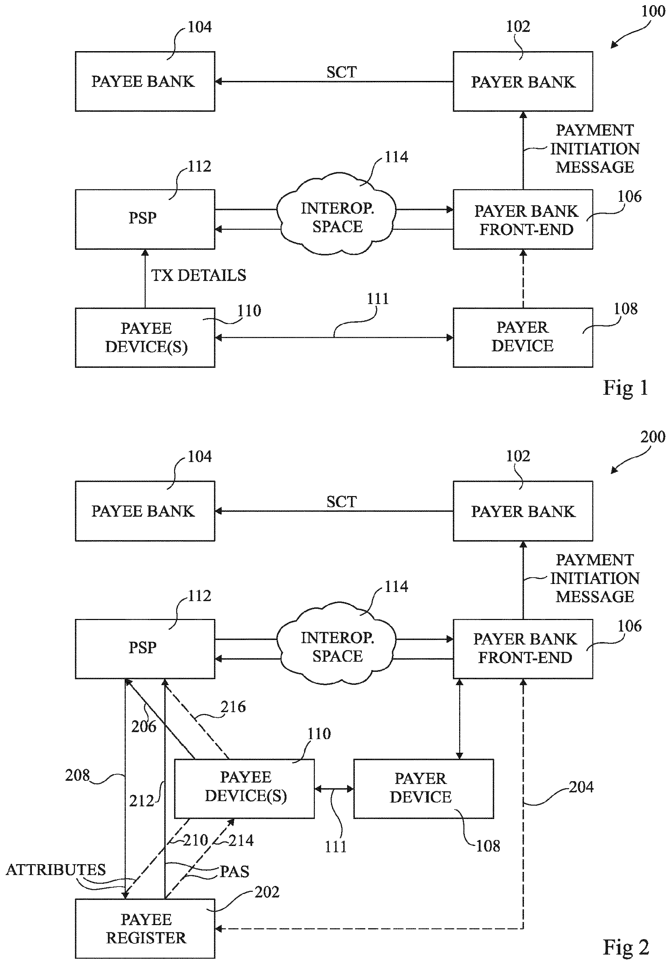

Figure 1 schematically illustrates an example of a push payment system 100 based on the SCT Inst payment scheme. In order to initiate a payment between a payer bank account at a payer bank (PAYER BANK) 102 and a payee bank account at a payee bank (PAYEE BANK) 104, a payment initiation message (PAYMENT INITIATION MESSAGE) is generated by a server (PAYER BANK FRONT-END) 106 of the payer bank, which will be referred to hereafter as a payment server. For example, the payer uses a payment application, running on a payer device (PAYER DEVICE) 108 such as a mobile device or PC, to instruct his/her bank, via the payment server 106, to initiate the fund transfer to a payee having one or more payee devices (PAYEE DEVICE(S)) 110. As represented by an arrow 111 between the payer device 108 and the payee device(s) 110, some transaction information may be communicated from the payee device(s) 110 to the payer device 108, such as the transaction amount, merchant name/ID, transaction date/time, etc. However, other more sensitive transaction data such as account details, are not for example transmitted over this interface.

The payer bank 102 knows the payer associated with the payer device 108 and therefore is able to identify the payer account from which the funds are to depart. The payer bank 102 also needs the account details, such as the IBAN, of the payee account in order to initiate the payment. When a payment is to be initiated, the transaction details (TX DETAILS), including the payee IBAN, are for example communicated by the one or more payee devices 110 to a payment service provider (PSP) 112. The PSP 112 is an entity that provides payment services to one or more payees, such as merchants, associated with the payee device(s) 110. The server 106 is for example tasked with contacting the PSP 112 associated with the payee device(s) 110 in order to obtain the payee IBAN. The exchange between the payment server 106 and the PSP 112 is for example via an interoperable space (INTEROP SPACE) 114, which corresponds to the technical infrastructure and regulatory framework that allows payments to be executed in the system, including the implementation of a payment-related protocol that defines how payments are to be performed (which data is exchanged, etc.). This protocol is for example defined in such a way that more than one PSP and more than one bank front-end 106 can exist and communicate with each other. The exchange over the interoperable space 114 is for example initiated after an interaction over the interface 111 between the payer device 108 and payee device 110.

If a fraudster is able to intercept the exchange between the payment server 106 and the PSP 112, the payee IBAN information supplied by the PSP 112 to the payment server 106 could be modified to indicate an account held by the fraudster, and the resulting payment could be made to this account in substitution for the correct account. Furthermore, the IBAN system covers various countries, including Europe, the Middle East, North Africa and the Caribbean, and thus once a fraudulent transfer has been made, for example to an account outside of the interoperable space 114, it may be difficult or impossible to recover the funds.

Figure 2 schematically illustrates a push payment system 200 based on the SCT Inst payment scheme according to an example embodiment of the present disclosure. Features in the system of Figure 2 that are similar to features of Figure 1 have been labelled with like reference numerals and will not be described again in detail. The payer device 108 is for example implemented by the device described in relation with Figure 2 of the international patent application published as WO2015/120949.

With respect to the system 100 of Figure 1, the system 200 additionally comprises a payee register (PAYEE REGISTER) 202 capable of communicating with the PSP 112 and/or with the one or more payee devices 110, and in some cases with the payment server 106, as represented by an arrow 204. For example, the payee register 202 corresponds to a server connected to a communications network such as the internet permitting communications with servers associated with many banks. The payee register 202 for example stores payee attributes and/or payee attribute signatures associated with a plurality of registered payees. These payee attributes and/or signatures have for example been generated and stored in the payee register 202 during an enrolment process described in more detail below.

The payee register 202 for example corresponds to a trusted entity in the payment system 200 that engages in a legal and commercial relationship with a plurality of payees, but does not play any direct role in the payment process. The register 202 for example assumes the responsibility of registering payees, such as merchants, and for this it may apply an approval process such as the process known in the art as KYC (Know Your Customer) for verifying the payee attributes.

For example, to enrol with the payee register 202, the payee provides, during the enrolment process, payee attributes (ATTRIBUTES) to the payee register 202, including at least the payee bank account number, such as an IBAN. The payee attributes also for example include at least an identifier of the payee, which could be a name, ID number or other identifier, etc. As represented by arrows 206 and 208, in some embodiments the attributes are provided from the one or more payee devices 110 to the payee register 202 via the PSP 112. Alternatively, as represented by a dashed arrow 210, the attributes could be provided directly from the one or more payee devices 110 to the payee register 202.

The payee register 202 for example responds by generating a payee attribute signature (PAS) based at least on the payee bank account number or IBAN. This signature is for example provided to the PSP 112. As represented by an arrow 212, in some embodiments the PAS is provided by the payee register 202 directly to the PSP 112. Alternatively, as represented by dashed arrows 214 and 216, the one or more payee device(s) 110 may relay the signature to the PSP 112.

While not illustrated in Figure 2, in some cases the payment system 200 may comprises multiple payee registers 202. For example, each bank could establish a payee register for their clients.

The payee attributes may include some or all of the elements presented in the following table. The columns P2M and P2P indicate, using an "x", when the corresponding element is relevant to person to merchant payments (P2M) and/or to person to person payments (P2P).

**[Table 1]**

| Element | P2M | P2P | Description |
|---|---|---|---|
| Payee register ID | x | x | Uniquely identifies the payee register in the payment system in the case that there are multiple registers |
| Merchant ID | x | | Uniquely identifies a merchant in the payee register |
| Payee Name | x | x | Merchant name or person name |
| Payee country | x | | Country code, for example as defined in the specification "ISO 3166-1 alpha-2" |
| Payee Address Line | x | | Address of payee |
| Payee BIC | x | x | The bank identifier code of the payee bank |
| Payee IBAN | x | x | IBAN of payee bank account |
| MCC | x | | Merchant category code, corresponding to a code used to classify the types of goods or services of a merchant |
| Merchant URL | x | | Universal Resource Locator of merchant |

In some embodiments, the payee attributes are communicated between entities in the system 200 using an XML (eXtensible Markup Language) structure, or a bitmap structure in which a bit is assigned to each attribute, and if the attribute is present, the bit is set. Additionally or alternatively, other structures could be supported, such as JSON (JavaScript Object Notation). The payee attribute signature may be generated based on some or all of the attributes listed in the table above, and is for example generated based at least on the payee bank account number such as the IBAN. In some embodiments, the signature is generated based on a string of bits formed by the concatenation of the various attributes forming the payee attributes, including in some cases bits indicating the presence of each attribute as indicated above.

The arrow 204 between the payment server 106 of the payer bank and the payee register 202 for example represents an exchange of a secret value, such as a private or public cryptographic key, between these entities, permitting the signature to be verified by the payment server 106, as will be described in more detail below.

In some embodiments, the payee register 202 is a merchant register storing attributes and/or attribute signatures associated with registered merchants who are permitted to receive payments from customers. In such a case, the one or more payee devices 110 may correspond to point of sale equipment.

Additionally or alternatively, the payee register 202 may be a service provided by one or more banks permitting their clients to register as payees enabling them to receive fund transfers from other parties.

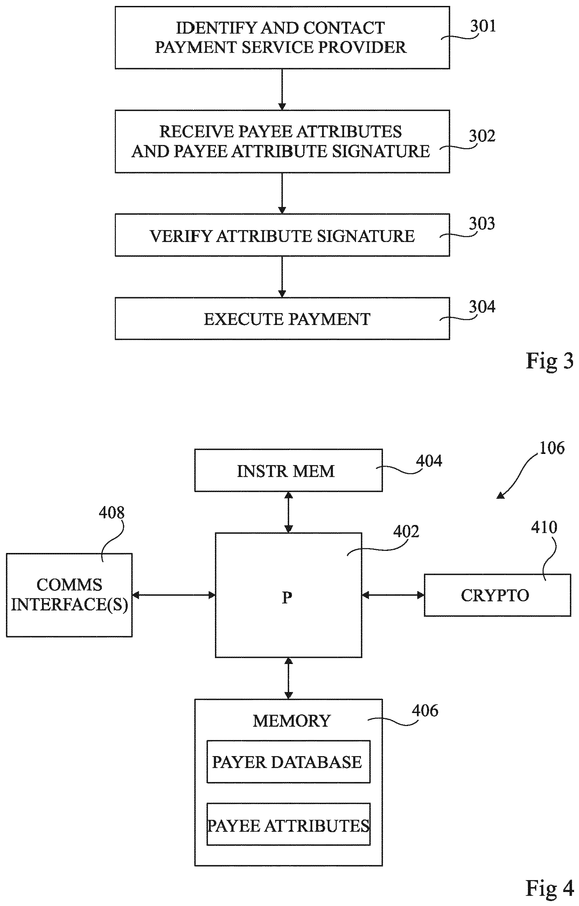

Operation of the push payment system 200 will now be described in more detail with reference to Figure 3.

Figure 3 is a flow diagram representing operations in a method of performing a push payment using the system 200 of Figure 2 according to an example embodiment. This method is for example implemented by the payment server 106 associated with the payer bank 102.

It is assumed that prior to any payment being made to the payee, the payee has registered with the payee register 202, and that a corresponding payee attribute signature (PAS) has been stored with the payment service provider 112.

It is also assumed that the payer has indicated, using the payer device 108, an intention to make a payment to the payee. For example, the payer is at the checkout of a store and opts to settle the bill using a payer initiated push payment. The payer device 108 for example generates an electronic instruction message, and transmits this message to the payment server 106 in order to initiate a fund transfer to the payee. The electronic instruction message for example identifies the payee using an identification number of the payee, which is contained within the instruction message.

In an operation 301, the payment server 106 of the payer bank 102 for example identifies the PSP 112 associated with the payee and contacts the PSP 112. There are many ways in which the payment server 106 may identify the PSP 112. For example, in the case of a payment related to mobile commerce, a URL of the PSP 112 is for example included in a QR code that is present on the pay page of the merchant. The payer device 108 is for example used to scan the QR code, and the URL is used by the payment server 106 to contact the PSP 112. Alternatively, the PSP 112 could be identified using a merchant application running on the payer device 108, or by an electronic communication received from point of sale equipment of the merchant. The PSP 112 is for example associated with an identifier, and for example has an X.509 certificate issued by a CA (Certificate Authority) and verified at every transaction.

In an operation 302, the payment server 106 for example receives from the PSP 112 the payee attributes, along with the corresponding payee attribute signature issued by the payee register 202. As indicated above, this signature has for example been generated based on some or all of the payee attributes, and for example at least based on the payee bank account number. In some cases it is also generated based on at least an identifier of the payee. The payee attributes and the payee attribute signature are for example transmitted by the PSP 112 to the payment server 106 along with the transaction details. The transaction details are for example provided by the one or more payee devices 110 during transaction initialization, and include for example at least the transaction amount and an identifier of the payee.

In an operation 303, the payment server 106 for example verifies the payee attributes based on the payment attribute signature. This verification for example involves recalculating the signature based on the attributes received from the PSP 112, and comparing the recalculated signature with the signature received from the PSP 112. If the signatures match, the payee attributes are considered to be valid. In some embodiments, the signature generation is based on a hash or digest value generated based on the payee attributes, as described in more detail below.

In an operation 304, if the payee attributes have been validated, the payment is for example executed. This for example involves generating, by the payment server 106, a payment initiation message (PAYMENT INITIATION MESSAGE), which is provided to the payer bank 102 in order to initiate the payment, for example in the form of an SCT transfer. This payment initiation message includes for example the payee account details.

Figure 4 schematically illustrates the payment server 106 of Figure 2 in more detail according to an example embodiment.

The payment server 106 for example comprises a processing device 402 comprising one or more processing cores (P) under control of instructions stored in one or more instruction memories (INSTR MEM) 404, the instructions for example implementing some or all of the operations of Figure 3 described above. The payment server 106 also for example comprises one or more data storage devices (MEMORY) 406 storing a database of registered payers (PAYER DATABASE), for example corresponding to clients of the payer bank 102. The one or more data storage devices 406 also for example temporarily store the payee attributes (PAYER ATTRIBUTES) communicated from the PSP 112. The payment server 106 for example comprises a communications interface (COMMS INTERFACE) 408 permitting communication with the PSP 112, and with other elements in the system 200. In some embodiments, the payment server 106 also comprises a cryptographic circuit (CRYPTO) 410.

The payee register 202 is for example implemented by elements similar to those of the payment server 106 of Figure 4, except that the one or more storage devices 406 for example store a payee database indicating payee attributes and/or payee attribute signatures.

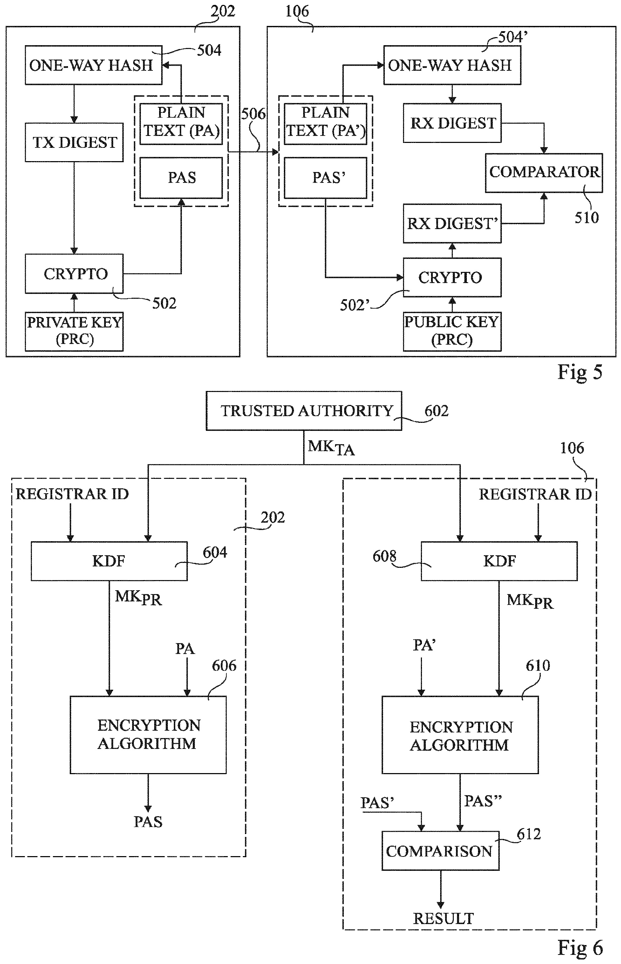

Examples of elements at the payee register 202 and at the payment server 106 for generating and verifying payee attribute signatures will now be described with reference to Figures 5 and 6.

Figure 5 schematically illustrates signature generation and verification according to a first example based on asymmetric cryptography.

The payee register 202 for example implements, using a hardware circuit or using software executed by a processing device, a cryptographic algorithm (CRYPTO) 502. For example, the cryptographic operation is performed using the cryptographic circuit 410 of the payee register 106. The payee attributes PA, comprising at least the payee account number, are for example cryptographically signed based on a payee registrar's private key (PRIVATE KEY (PRC)) of the payee registrar certificate PRC in order to generate a payee attribute signature (PAS). For example, as illustrated in Figure 5, the payee attributes are used to generate a digest value (TX DIGEST) by applying a one-way hash function (ONE-WAY HASH) 504. This digest value is then encrypted by the cryptographic algorithm 502 based on the private key of the payee registrar certificate PRC in order to generate the payee attribute signature PAS. This signature is for example appended to the payment attributes forming the plain text (PLAIN TEXT (PA)). The payment attributes and signature PAS are then for example transmitted to and stored at the PSP 112, from where they can be supplied to the payment server 106, as represented by an arrow 506 in Figure 5.

The payment server 106 for example applies the same cryptographic algorithm (CRYPTO) 502' to the received payment attributes PA' and received payee attribute signature (PAS). For example, the received plain text (PLAIN TEXT (PA')) is used to generate a digest value (RX DIGEST) based on the received attributes by applying a one-way hash function (ONE-WAY HASH) 504', which is for example the same function as the one-way hash function 504 applied by the payee register 202. The received PAS' is decrypted using the cryptographic algorithm 502' based on the public key (PUBLIC KEY (PRC)) of the payee registrar certificate PRC to generate a digest value RX DIGEST'. The value RX DIGEST' is for example compared by a comparator (COMPARATOR) 510 with the signature RX DIGEST to determine whether the verification is successful, i.e. the digests match, or unsuccessful i.e. one or more bits differ. If verification is successful, the received payment attributes PA' can be used for executing the payment, whereas if verification fails, the received payment attributes PA' are for example discarded.

Figure 6 schematically illustrates signature generation and verification according to another example based on symmetric cryptography.

A trusted authority (TRUSTED AUTHORITY) 602 of the payment system for example issues a master key MKTA to both the payee register 202 and the payment server 106.

The payee register 202 for example implements, using a hardware circuit or using software executed by a processing device, a key derivation function (KDF) 604 and an encryption algorithm (ENCRYPTION ALGORITHM) 606. For example, these operations are at least partially performed using the cryptographic circuit 410 of the payee register 106. The key derivation function is used to derive a key MKPR from the master key MKTA, based on an identifier (REGISTRAR ID) associated with the payee register 202. The payee attributes PA, comprising at least the payee account number, are then encrypted based on the key MKPR in order to generate the payee attribute signature (PAS) stored at the PSP 112. This signature is for example a MAC (Message Authentication Code) or HMAC (Hashed MAC).

The payment server 106 for example applies the same key derivation function and encryption algorithm, represented by blocks 608 and 610. For example, these operations are at least partially performed using the cryptographic circuit 410 of the payment server 106. The key MKPR is for example derived from the master key MKTA, based on the identifier (REGISTRAR ID) associated with the payee register 202. This identifier is for example sent to the payment server 106 with the rest of the transaction data. The payment attributes PA' received from the PSP 112 are encrypted based on the key MKPR. The resulting signature PAS" is for example compared (COMPARISON) with the signature PAS' received from the PSP 112, as represented by a block 612, and the result (RESULT) indicates whether the verification is successful, i.e. the signatures match, or unsuccessful i.e. one or more bits differ between the signatures.

An advantage of the embodiments described herein is that a push payment can be implemented with improved security without greatly increasing complexity in the system with respect to existing push payment solutions.

Having thus described at least one illustrative embodiment, various alterations, modifications and improvements will readily occur to those skilled in the art. For example, it will be apparent to those skilled in the art that while two examples of signature generation and verification have been described in relation with Figures 5 and 6, other solutions would be possible.

Furthermore, while Figure 6 illustrates an example in which the Trusted Authority provides the master key MKTA to the payee register 202, and the payee register 202 derives the key MKPR, in alternative embodiments, the Trusted Authority directly provides the key MKPR to the payee register 202.

Furthermore, it will be apparent to those skilled in the art that the various features described in relation with the various embodiments could be combined, in alternative embodiments, in any combination.

## Claims

1. A method of making a payer initiated push payment to a payee bank account comprising:
- generating, by a payee register (202), a payee attribute signature (PAS) based on payee attributes (PA) provided by a payee device (110), the payee attributes (PA) comprising at least an account number of the payee bank account, and storing the payee attribute signature (PAS) at a second server (112) associated with a payee;
- receiving, by a first server (106) from a payer device (108) an instruction to initiate a fund transfer to the payee;
- receiving, by the first server (106) from the second server (112), payee attributes (PA') associated with the payee and a payee attribute signature (PAS') associated with the payee attributes;
- verifying, by the first server (106), the payee attribute signature (PAS') based on the payee attributes (PA') received from the second server (112); and
- initiating, by the first server (106), the push payment to the payee bank account if the verification of the payee attribute signature is successful.

2. The method of claim 1, wherein initiating the push payment by the first server (106) comprises generating a payment initiation message comprising the account number of the payee bank account.

3. The method of claim 1 or 2, wherein verifying the payee attribute signature (PAS') comprises:
- generating, by the first server (106), a further payee attribute signature (PAS") based on the payee attributes (PA') received from the second server (112) and on a private key (MK_{PR}) ; and
- comparing the further payee attribute signature (PAS") with the payee attribute signature (PAS') received from the second server (112).

4. The method of claim 3, further comprising deriving, by the first server (106), the private key (MK_{PR}) from a master key (MK_{TA}) based on an identifier of a payee register (202).

5. The method of claim 1 or 2, wherein the payee attribute signature (PAS) is generated by applying a first hash function (504) to the payee attributes to generate a first digest value (TX DIGEST) and generating a payee attribute signature (PAS) by encrypting the first digest value based on a private key.

6. The method of claim 5, further comprising:
- applying, by the first server (106), a second hash function (504'), which is the same as the first hash function (504), to the received payee attributes (PA') to generate a second digest value (RX DIGEST);
- decrypting the received payee attribute signature (PAS') based on a public key to generate a further digest value (RX DIGEST'); and
- comparing the second digest value (RX DIGEST) with the further digest value (RX DIGEST') to verify the payee attribute signature (PAS').

7. The method of any of claims 1 to 6, wherein the payee account number is an IBAN (International Bank Account Number).

8. The method of any of claims 1 to 7, wherein the push payment is a Single Euro Payments Area Instant Credit Transfer (SCT Inst).

9. A push payment system comprising:
- a payee register (202) configured to generate a payee attribute signature (PAS) based on payee attributes (PA) provided by a payee device (110), the payee attributes (PA) comprising at least an account number of a payee bank account, and to store the payee attribute signature (PAS) at a second server (112) associated with a payee; and
- a payment server configured to:
receive from a payer device (108) an instruction to initiate a fund transfer to the payee;
receive, from the second server (112), payee attributes (PA') associated with the payee and a payee attribute signature (PAS') associated with the payee attributes;
verify the payee attribute signature (PAS') based on the payee attributes (PA') received from the second server (112); and
initiate a push payment to the payee bank account if the verification of the payee attribute signature is successful.

10. The push payment system of claim 9, wherein the payee register (202) is configured to store payee attributes associated with a plurality of payees.
